Europäisches Patentamt

European Patent Office

Office européen des brevets

(11) Veröffentlichungsnummer: **0 243 297 B1**

(12) **EUROPÄISCHE PATENTSCHRIFT**

(45) Veröffentlichungstag der Patentschrift: **09.09.92**

(21) Anmeldenummer: **87730037.6**

(22) Anmeldetag: **14.04.87**

(51) Int. Cl.⁵: **H04L 12/54**, H04L 12/00

(54) Verfahren zur Flusssteuerung von Daten innerhalb eines vermaschten Datennetzes.

(30) Priorität: **23.04.86 DE 3614062**

(43) Veröffentlichungstag der Anmeldung:
**28.10.87 Patentblatt 87/44**

(45) Bekanntmachung des Hinweises auf die
Patenterteilung:
**09.09.92 Patentblatt 92/37**

(84) Benannte Vertragsstaaten:
**AT BE DE IT NL**

(56) Entgegenhaltungen:
**WO-A-85/02964**
**US-A- 4 475 192**

**IEEE TRANSACTIONS ON COMMUNICA-
TIONS, Band COM-28, Nr. 4, April 1980, Seiten 553-574, IEEE, New York, US; M. GERLA et
al.: "Flow control: A comparative survey"**

**PROCEEDINGS OF THE INTERNATIONAL
SWITCHING SYMPOSIUM, 7.-11. Mai 1984,
Session 43A, Paper 5, Seiten 1-7, Florence,
IT; I.G. NIEMEGEERS et al.: "Congestion control and flow control in the DPS-1500 packet
switching system"**

(73) Patentinhaber: **SIEMENS AKTIENGESELL-
SCHAFT
Wittelsbacherplatz 2
W-8000 München 2(DE)**

(72) Erfinder: **Müller, Wilhelm, Dipl.-Ing.
Mackensenstrasse 10
W-1000 Berlin 30(DE)**
Erfinder: **Schneider, Werner, Dr., Dipl.-Phys.
Geigenbergerstrasse 25
W-8000 München 71(DE)**

Rank Xerox (UK) Business Services

## Beschreibung

Die Erfindung betrifft ein Verfahren zur Flußsteuerung von Daten, die von Benutzern über Ursprung und Ziel miteinander verbindende Knoten austauschbar sind, wobei die Knoten innerhalb eines Datennetzes beliebig vermascht über Leitungen miteinander verbunden sind und jeder Knoten mit einer Sende-Speichereinrichtung und einer Empfangs-Speichereinrichtung ausgestattet ist.

Die Flußsteuerung von Daten innerhalb vermaschter Datennetze dient dazu, die Übertragung der Daten möglichst ohne Informationsverluste durchzuführen. So können, insbesondere bei Benutzern mit unterschiedlicher Datenübertragungsmenge innerhalb einer Zeiteinheit, sogenannte Datenstaus auftreten, die - sofern keine entsprechenden Überwachungsmaßnahmen getroffen sind - zu erheblichen Störungen bis zum totalen Datenverlust führen können. Aus der in "European Computer Manufacturers Assiociation" (ECMA/TC24/84/223, Supercedes 84/188), einer europäischen Norm für Computeranwender, ist ein sogenanntes "End to End Flow-Control"-Verfahren bekannt, bei dem in den Ziel- und Ursprungsknoten einer Datenverbindung deren Speichereinrichtungen im Hinblick auf die Datenaufnahmefähigkeit überwacht werden. Im Falle des Überschreitens einer bestimmten Speicherkapazität wird dann ein Sperrbit erzeugt und beispielsweise von der Sende-Speichereinrichtung des Zielknotens zur Empfangs-Speichereinrichtung des Ursprungsknotens zurückgesendet. Dort bewirkt diese Information die Sperrung der Sende-Speichereinrichtung, wodurch sichergestellt ist, daß keine in der Sende-Speichereinrichtung gespeicherten Daten mehr ausgesendet werden. Sobald die Empfangs-Speichereinrichtung jedoch wieder zur Aufnahme weiterer Daten fähig ist - der Datenstau im Ursprungsknoten ist abgebaut - wird mit der Übertragung eines entsprechenden Freigabebits und deren Empfang in Zielknoten das Aussenden weiterer Daten vom Zielknoten zum Ursprungsknoten wieder veranlaßt.

Diese Überwachung der Datenspeicher in den jeweiligen Ziel-und Ursprungsknoten stellt zwar sicher, daß die Datenübertragung zwischen diesen beiden Knoten gesichert ist, läßt jedoch die restliche Übertragungsstrecke unberücksichtigt. Da aber insbesondere in stark vermaschten Datennetzen die unterschiedlichsten Benutzer über verschiedenste Geräte -Datenstationen, Rechner etc. - mit unterschiedlichen Datenübertragungsraten ihre Daten übertragen, besteht die der Erfindung zugrunde liegende Aufgabe darin, eine Erweiterung des aus der europäischen Norm bekannten Verfahrens dahingehend vorzusehen, daß die gesamte Übertragungstrecke - im ungünstigsten Fall können dies mehrere hintereinander geschaltete Knoten verschiedenster Art (Durchgangs-, Ziel- und Ursprungsknoten) sein - mit einbezogen wird. Erfindungsgemäß wird dies durch die Kombination der Merkmale des Patentanspruchs 1 erreicht.

Als wesentlich für die Erfindung ist anzusehen, daß sämtliche an der Verbindung beteiligte Knoten in einen bestimmten Zeitzyklus das erste Flußkontrollsignal aussenden, welches den Freizustand der jeweiligen Empfangs-Speichereinrichtung und damit die Aufnahmefähigkeit für weitere Datenmengen signalisiert. Soweit jedoch eine bestimmte Empfangs-Speicherkapazität innerhalb eines oder mehrerer entsprechender Knoten erreicht ist, wird erfindungsgemäß sofort das zweite Flußkontrollsignal von der entsprechenden Sende-Speichereinrichtung ausgesendet, das ebenfalls - wie das erste Flußkontrollsignal - von den Empfangs-Speichereinrichtungen der jeweils vor und/oder nachgeschalteten Knoten durch unverändertes Weiterleiten an die jeweiligen Sende-Speichereinrichtungen zur weiteren ungehinderten Datenübertragung berechtigt.

Erst in einem Staufall - ein oder mehrere Empfangs- und/oder Sende-Speichereinrichtungen sind hinsichtlich ihrer Aufnahmekapazität erschöpft, werden diese Flußkontrollsignale (erstes und zweites) gelöscht bzw. mit einer Zusatzkennung versehen und in Empfangsrichtung - also in Rückwärtsrichtung gegebenenfalls über mehrere Knoten zum sendenden Ursprungs-oder Zielknoten zurückgesendet. Das Ausbleiben bzw. die Erkennung der "geänderten" Flußkontrollsignale innerhalb von zwei Zeitzyklen bewirkt die Sperrung der entsprechenden Sende-Speichereinrichtungen im Ursprungs- oder Zielknoten und die Umschaltung dieser Sende-Speichereinrichtung vom Zustand "ungestört" in den Zustand "Stau eingetreten". Bis zum Empfang der sonst üblichen zyklischen und auch bedarfsweise erzeugten Flußkontrollsignale nach der Auflösung eines Datenstaus unterbleibt der zusätzliche Datenaustausch, womit sichergestellt ist, daß unabhängig von der Verbindungsstrecke durch das vermaschte Datennetz keine Daten verloren gehen.

Gemäß einer vorteilhaften Ausgestaltung der Erfindung ist vorgesehen, beim Ausbleiben der Flußkontrollsignale über zwei Zeitzyklen die jeweilige Sende-Speichereinrichtung vom Zustand "Stau eingetreten" umzustalten in den Zustand "Streckenfehler", so daß in diesem Falle durch entsprechende Mitteilung an die Benutzer der Datenaustausch bis zur Wiederherstellung der gestörten Verbindungsstrecke gänzlich unterbrochen ist. Damit ist eine zusätzliche Datensicherung erreicht.

Das erfindungsgemäße Verfahren wird anhand eines figürlich dargestellten Ausführungsbeispiels näher erläutert, in dem lediglich die zur Funktion wesentlichen Schalteinrichtungen als Blockschaltbild dargestellt sind.

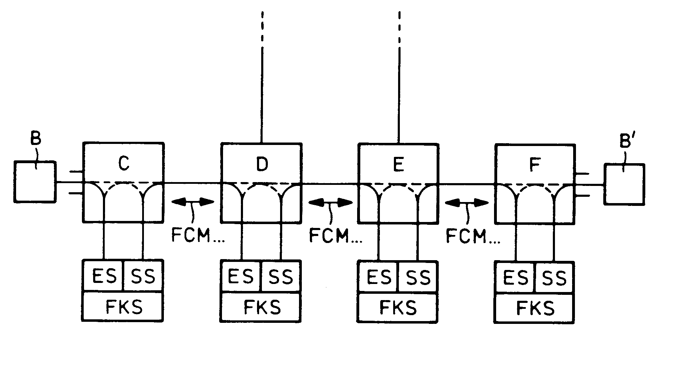

In der Figur ist eine Datenübertragungsstrecke angedeutet, die einen Teilausschnitt eines vermaschten Datennetzes darstellt. Die Benutzer B, B′ werden über die Knoten C - F über entsprechende Leitungsabschnitte miteinander verbunden. In diesem Leitungsabschnitt bilden die Knoten C und F die sogenannten Ursprungs-Zielknoten und die Knoten D und E sogenannte Durchgangsknoten (Tandemknoten). Die Durchgangsknoten D und E sind durch weitere angedeutete Verbindungen zu anderen, nicht dargestellten Knoten markiert. Jeder Knoten - Ursprungs-Zielknoten C, F und Durchgangsknoten D, E - enthält den Flußkontrollsignalgeber FKS und die Empfangs-Speichereinrichtung ES sowie die Sende-Speichereinrichtung SS. Innerhalb des jeweiligen Knotens C bis F sind die Verbindungswege angedeutet, die erkennen lassen, daß sowohl die Empfangs-als auch die Senderichtung zu beiden Benutzern B und B′ verlaufen können. Weiterhin ist angedeutet, daß zwischen den einzelnen Knoten, C-D, D-E, E-F die Flußkontrollsignale FCM... in beiden Richtungen übertragen werden können. Im Ausführungsbeispiel wird davon ausgegangen, daß zwischen den beiden Benutzern B, B′ eine Datenverbindung über die entsprechenden Knoten C bis F besteht und daß von beiden Benutzern B und B′ Daten sowohl gesendet als auch empfangen werden. Als Beispiel sei davon ausgegangen, daß der Benutzer B, der unmittelbar mit dem Ursprungsknoten C verbunden ist, seine Daten über die dort vorhandene Empfangs-Speichereinrichtung ES und anschließend über die Sende-Speichereinrichtung SS wieder auf die Datenübertragungsleitung überträgt. In gleicher Reihenfolge werden diese Daten von dem Durchgangsknoten D und deren Empfangs-Speichereinrichtung ES empfangen und in gleicher Weise mittels der dort vorhandenen Sende-Speichereinrichtung SS wieder zum nächsten Knoten E und F weitergeleitet. Schließlich empfängt der zweite Teilnehmer B′ die Daten aus dem Zielknoten F über die dort befindliche Sende-Speichereinrichtung SS. Während der Übertragung dieser Daten senden alle an der Verbindung beteiligten Knoten C bis F jeweils zyklisch in einer vorgegebenen Zeitfolge ein erstes Flußkontrollsignal FCM1, das von den Empfangs-Speichereinrichtungen ES der jeweils vor und/oder nachgeschalteten Knoten C bis F empfangen und durch unverändertes Weiterleiten an die entsprechende Sende-Speichereinrichtung SS der jeweiligen Knoten C bis F zur Aufnahme weiterer Datenmenge berechtigt. Das Flußkontrollsignal FCM... wird durch den Flußkontrollsignalgeber FKS erzeugt, eine Schalteinrichtung, die jedem Knoten C bis F fest zugeordnet ist. Sofern also das erste Flußkontrollsignal FCM1, beispielsweise von der Sende-Speichereinrichtung SS des Durchgangsknotens E in Rückwärtsrichtung, also zur Empfangs-Speichereinrichtung ES des Durchgangsknotens D, gesendet und dort empfangen wird, ist die im Knotenbereich D vorhandene Sende-Speichereinrichtung SS berechtigt, weitere Daten in Richtung zum Durchgangskoten E zu senden. Sofern also zwischen dieser Übertragungsstrecke keine Datenstaus vorliegen, wird das erste Flußkontrollsignal FCM1 in gleicher Weise zum nächsten Knoten, also zum Ursprungsknoten C unverändert weitergereicht. Neben diesem ersten Flußkontrollsignal FCM1 wird von den an der Verbindung beteiligten Knoten C bis F bedarfsweise in Abhängigkeit von einer die durchschnittlich zu übertragene Anzahl von Daten überschreitenden Datenmenge innerhalb eines Zeitzyklusses ein zweites Flußkontrollsignal FCM2 gesendet, das in gleicher Weise von den jeweiligen Empfangs-Speichereinrichtungen ES der jeweils vor und/oder nachgeschalteten Knoten C bis F durch unverändertes Weiterleiten an die Sende-Speichereinrichtung SS der jeweiligen Knoten C bis F zur Aufnahme weiterer Daten berechtigt. Auch dieses zweite Flußkontrollsignal FCM2 wird also bei der ordnungsgemäßen Übertragung der Daten - also ohne Datenstau -unverändert von Knoten zu Knoten weitergereicht.

Tritt ein Datenstau, beispielsweise durch den Überlauf einer Empfangs-Speichereinrichtung innerhalb der Datenstrecke auf, so wird von dem entsprechenden Knoten, beispielsweise dem Durchgangsknoten E, von der dort befindlichen Sende-Speichereinrichtung SS sowohl das zyklisch ausgesendete erste Kontrollsignal FCM1 als auch das zweite, bedarfsweise ausgesendete Flußkontrollsignal FCM2 entweder gelöscht oder mit einer Zusatzkennung versehen, und in üblicher Weise mit der Sende-Speichereinrichtung SS in Rückwärtsrichtung, in diesem Fall zu dem davor liegenden Durchgangsknoten D, gesendet. Nach dem Empfang der gelöschten bzw. geänderten Flußkontrollsignale FCM1, FCM2 gelangen diese, wie bereits beschrieben, zum Ursprungsknoten C und bewirken dort mit ihrem Ausbleiben bzw. mit ihrer Zusatzkennung innerhalb von zwei Zeitzyklen die Sperrung der dort befindlichen Sende-Speichereinrichtung SS. Die Sende-Speichereinrichtung SS wird in diesem Fall vom Zustand "ungestört" in den Zustand "Stau eingetreten" umgeschaltet. Der Benutzer B wird daraufhin veranlaßt, keine weiteren Daten zur Empfangs-Speichereinrichtung ES mehr zu übertragen, so daß auch von der Sende-Speichereinrichtung SS keine Daten mehr in Richtung zu dem Benutzer B′ übertragen werden.

Bleibt dieser Zustand über einen Zeitraum von mehr als zwei Zeitzyklen erhalten, so kann davon ausgegangen werden, daß irgendwo auf der Datenstrecke ein Fehlerzustand vorhanden ist, der die weitere Datenübertragung nicht mehr ermöglicht. Die Sende-Speichereinrichtung SS des Ursprungsknotens C wird in diesem Fall vom Zustand "Stau eingetreten" in den Zustand "Streckenfehler" umgeschaltet. Dieser Zustand führt dazu, daß vom Benutzer B der Datenaustausch unterbrochen und entsprechende Maßnahmen zur Wiederherstellung der gestörten Datenstrecke getroffen werden.

Da die Flußkontrollsignale FCM... durch jeden innerhalb der Verbindung liegenden Knoten im Falle einer Staubildung entsprechend beeinflußt werden können, werden durch dieses Verfahren nicht nur die unmittelbar den Benutzern zugeordneten Ursprungs- und Zielknoten C und F überwacht, sondern sämtliche an der Verbindung beteiligten Knoten C bis F. Hierbei ist zu berücksichtigen, daß die Sende- und Empfangs-Speichereinrichtungen SS und ES der Durchgangsknoten D und E auch durch andere Datenverbindungsstrecken beansprucht werden.

**Patentansprüche**

1. Verfahren zur Flußsteuerung von Daten, die von Benutzern über Ursprung und Ziel miteinander verbindende Knoten austauschbar sind, wobei die Knoten innerhalb eines Datennetzes beliebig vermascht über Leitungen miteinander verbunden sind und jeder Knoten mit einer Sende-Speicher- und einer Empfangs-Speichereinrichtung ausgestattet ist,
**gekennzeichnet durch**
die Kombination der Merkmale
1.1 die an einer Verbindung beteiligten Knoten (C..., F) senden zyklisch in einem größeren Zeitzyklus, als dem, der in Abhängigkeit von einer zwischen zwei Benutzern über die längste Verbindungsstrecke innerhalb des Datennetzes durchschnittlich zu übertragenen Anzahl von Daten vorgegebenen ist, ein erstes Flußkontrollsignal (FCM1) aus, das von den Empfangs-Speichereinrichtungen (ES) der jeweils vor und/oder nachgeschalteten Knoten (C...F) durch unverändertes Weiterleiten an die Sende-Speichereinrichtung (SS) der jeweiligen Knoten (C... F) zur Aufnahme weiterer Datenmengen berechtigt,
1.2 die an der Verbindung beteiligten Knoten (C...F) senden bedarfsweise in Abhängigkeit von einer die durchschnittlich zu übertragene Anzahl von Daten überschreitenden Datenmenge innerhalb eines Zeitzyklusses ein zweites Flußkontrollsignal (FCM2), das von den Empfangs-Speichereinrichtungen (ES) der jeweils vor und/oder nachgeschalteten Knoten (C... F) durch unverändertes Weiterleiten an die Sende-Speichereinrichtung (SS) der jeweiligen Knoten (C...F) zur Aufnahme weiterer Datenmengen berechtigt,
1.3 das erste Flußkontrollsignal (FCM1) und das zweite Flußkontrollsignal (FCM2) werden im Staufall in der Empfangs-Speichereinrichtung (ES) der jeweils vor und/oder nachgeschalteten Knoten (C...F) gelöscht bzw. mit einer Zusatzkennung versehen und mittels der Sende-Speichereinrichtung (SS) der jeweils vor und/oder nachgeschalteten Knoten (C...F) in Empfangsrichtung (Rückwärtsrichtung) zurückgesendet,
1.4 in den Ursprung und Ziel bildenden Knoten (C,F) bewirkt das Ausbleiben der im Staufall gelöschten ersten und zweiten Flußkontrollsignale (FCM1, FCM2) bzw. der Empfang der im Staufall mit der Zusatzkennung versehenen ersten und zweiten Flußkontrollsignale (FCM1, FCM2) innerhalb von zwei Zeitzyklen die Sperrung der jeweiligen Sende-Speichereinrichtung (SS), wobei die jeweilige Sende-Speichereinrichtung (SS) vom Zustand "ungestört" in "Stau eingetreten" umschaltbar ist.

2. Verfahren nach Anspruch 1, **gekennzeichnet durch** die Kombination der Merkmale
2.1 in den Ursprung und Ziel bildenden Knoten (C, F) bewirkt das Ausbleiben der im Staufall gelöschten ersten und zweiten Flußkontrollsignale (FCM1, FCM2) bzw. der Empfang der im Störungsfall mit der Zusatzkennung versehenen ersten und zweiten Flußkontrollsignale (FCM1, FCM2) nach der Zeit von zwei Zeitzyklen eine Zustandsänderung der jeweiligen Sende-Speichereinrichtung (SS) vom Zustand "Stau eingetreten" in "Streckenfehler",
2.2 der Zustand "Streckenfehler" wird den jeweiligen Benutzern von der Sende-Speichereinrichtung (SS) übertragen.

**Claims**

1. Method for the flow control of data which can be exchanged by users via nodes connecting origin and destination to one another, the nodes being connected to one another arbitrarily meshed via lines within a data network and each node being equipped with a transmission memory means and a reception memory means, characterised by the combination of the features:
1.1 the nodes (C... , F) participating in a connection cyclically transmit a first flow control signal (FCM1) in a longer time cycle than that which is defined depending on an average number of data items to be transmitted between two users via the longest connecting path within the data network, which flow control signal provides authorisation for receiving further quantities of data from the reception memory means (ES) of the respective upstream and/or downstream nodes (C...F) by unchanged forwarding to the transmission memory means (SS) of the respective nodes (C...F),

1.2 when required the nodes (C...F) participating in the connection transmit a second flow control signal (FCM2) depending on a quantity of data exceeding the average number of data items to be transmitted within a time cycle, which flow control signal provides authorisation for receiving further quantities of data from the reception memory means (ES) of the respective upstream and/or downstream nodes (C...F) by unchanged forwarding to the transmission memory means (SS) of the respective nodes (C...F),

1.3 in the case of a jam in the reception memory means (ES) of the respective upstream and/or downstream nodes (C...F), the first flow control signal (FCM1) and the second flow control signal (FCM2) are erased or are provided with an additional identifier and are sent back by means of the transmission memory means (SS) of the respective upstream and/or downstream nodes (C...F) in receiving direction (reverse direction), and

1.4 in the nodes (C, F) forming origin and destination, the omission of the first and second flow control signals (FCM1, FCM2) erased in the case of a jam, or the reception of the first and second flow control signals (FCM1, FCM2) provided with the additional identifier in the case of a jam, within two time cycles causes the inhibition of the respective transmission memory means (SS), it being possible to switch the respective transmission memory means (SS) over from the "undisturbed" to the "jam has occurred" state.

2. Method according to Claim 1, characterised by the combination of the features:

2.1 in the nodes (C, F) forming origin and destination, the omission of the first and second flow control signals (FCM1, FCM2) erased in the case of a jam, or the reception of the first and second flow control signals (FCM1, FCM2) provided with the additional identifier in the event of a disturbance, after the time of two time cycles causes a change of state of the respective transmission memory means (SS) from the "jam has occurred" to the "line fault" state, and

2.2 the "line fault" state is transmitted to the respective users by the transmission memory means (SS).

**Revendications**

1. Procédé pour commander le flux de données qui doivent être échangées par l'intermédiaire de noeuds reliant entre eux des utilisateurs par l'intermédiaire d'une origine et d'une destination, les noeuds à l'intérieur d'un réseau de données étant reliés entre eux, d'une manière maillée à volonté, par l'intermédiaire de lignes et chaque noeud étant pourvu d'un dispositif de mémoire d'émission et d'un dispositif de mémoire de réception, caractérisé par la combinaison des caractéristiques suivantes :

1.1 les noeuds (C..., F) qui participent à une liaison émettent cycliquement, en un cycle temporel plus étendu que celui qui est prédéterminé en fonction d'un nombre de données, qui doivent être transmises en moyenne entre deux utilisateurs par l'intermédiaire de la section de liaison la plus longue à l'intérieur du réseau de données, un premier signal de contrôle de flux (FCM1), qui est autorisé par les dispositifs de mémoire de réception (ES) des noeuds (C...F) branchés respectivement en amont et/ou en aval, moyennant une retransmission sans changement au dispositif de mémoire d'émission (SS) du noeud respectif (C...F) pour la prise en charge d'autres quantités de données,

1.2 les noeuds (C...F) participant à la liaison émettent, le cas échéant, en fonction d'une quantité de données dépassant le nombre moyen de données devant être transmises, à l'intérieur d'un cycle temporel, un second signal de contrôle de flux (FCM2), qui est autorisé par les dispositifs de mémoire de réception (ES) des noeuds (C...F) branchés respectivement en amont et/ou en aval, moyennant une retransmission sans changement au dispositif de mémoire d'émission (SS) du noeud respectif (C...F) pour la prise en charge d'autres quantités de données,

1.3 dans le cas d'une accumulation dans le dispositif de mémoire de réception (ES) des noeuds (C...F) branchés respectivement en amont et/ou en aval, le premier signal de contrôle de flux (FCM1) et le second signal de contrôle de flux (FCM2) sont effacés ou pourvus d'une caractérisation supplémentaire et renvoyés au moyen du dispositif de mémoire d'émission (SS) des noeuds (C...F) prévus respectivement en amont et/ou en aval, dans le sens de réception (sens rétrograde),

1.4 dans des noeuds (C,F) formant l'origine et la destination, l'absence des premier et second signaux de contrôle de flux (FCM1, FCM2) effacés dans le cas d'une accumulation ou la réception des premier et second signaux de contrôle de flux (FCM1, FCM2) pourvus de la caractérisation supplémentaire dans le cas d'une accumulation provoque, pendant deux cycles temporels, le blocage du dispositif respectif de mémoire d'émission (SS), ce dispositif respectif de mémoire d'émission (SS) pouvant être commuté de l'état "non perturbé" dans l'état "apparition d'une accumulation".

2. Procédé suivant la revendication 1, caractérisé par la combinaison des caractéristiques suivantes

2.1 dans les noeuds (C,F) constituant l'origine et la destination, l'absence des premier et second signaux de contrôle de flux (FCM1, FCM2) effacés dans le cas d'une accumulation ou la réception des premier et second signaux de contrôle de flux (FCM1, FCM2) pourvus de l'identification supplémentaire dans le cas d'une perturbation déclenche le passage du dispositif respectif de mémoire d'émission (SS) de l'état "apparition d'une accumulation" dans l'état "défaut dans la section",

2.2 l'état "défaut dans la section" est transmis aux utilisateurs respectifs du dispositif de mémoire d'émission (SS).